# EUROPÄISCHE PATENTANMELDUNG

(11) **EP 2 910 612 A1**
(43) Veröffentlichungstag der Anmeldung: **26.08.2015**
(21) Anmeldenummer: 14155867.6
(22) Anmeldetag: 20.02.2014
(51) Int. Cl.: C09D 175/04, C08G 18/42, C08G 18/40

(54) **Beschichtungsmittelzusammensetzungen und daraus hergestellte Beschichtungen und sowie deren Verwendung**

(71) Anmelder: BASF Coatings GmbH, 48165 Münster (DE)
(72) Erfinder: Klein, Günter, 48165 Münster (DE); Wenking, Ulrike, 48565 Steinfurt-Borghorst (DE); Weiher, Christian, 48165 Münster (DE); Hoffmann, Peter, 48308 Senden (DE); Werner, Melanie, 48727 Billerbeck (DE)

(57) **Zusammenfassung**

Die vorliegende Erfindung betrifft eine nichtwässrige Beschichtungsmittelzusammensetzung enthaltend
(A) mindestens eine polyhydroxylgruppenhaltige Komponente (A und
(B) mindestens eine polyisocyanatgruppenhaltige Komponente (B), dadurch gekennzeichnet, dass sie mindestens ein Reaktionsprodukt (RP) mit einer Säurezahl < 20 mg KOH/g enthält, das herstellbar ist durch Umsetzung von mindestens einer Dimerfettsäure (a) mit mindestens einer aliphatischen, araliphatischen oder aromatischen dihydroxyfunktionellen Verbindung (b), wobei die Verbindung (b) ein zahlenmittleres Molekulargewicht von 120 bis 6000 g/mol aufweist.

Gegenstand der vorliegenden Erfindung sind außerdem die aus diesen Beschichtungsmittelzusammensetzungen hergestellten Beschichtungen sowie deren Verwendung.

## Beschreibung

Die vorliegende Erfindung betrifft nichtwässrige Beschichtungsmittelzusammensetzungen enthaltend mindestens eine polyhydroxylgruppenhaltige Komponente (A) und mindestens eine polyisocyanatgruppenhaltige Komponente (B). Gegenstand der vorliegenden Erfindung sind außerdem die aus diesen Beschichtungsmittelzusammensetzungen hergestellten Beschichtungen sowie deren Verwendung, insbesondere für die Automobilserienlackierung, die Automobilreparaturlackierung und die Beschichtung von Anbauteilen sowie von Kunststoffen.

Bei einer typischen Mehrschichtlackierung in der Automobilserienlackierung ist auf einem mit einer Elektrotauchlackierung beschichteten Substrat eine Füllerschicht, eine Basislackschicht und eine Klarlackschicht aufgebracht. Als Klarlacke können beispielsweise 2-Komponentenklarlacke (2K-Klarlacke) eingesetzt werden. Bei einem Klarlack handelt es sich um einen Beschichtungsstoff, der nach Applikation und Härtung eine transparente Beschichtung (die Klarlackschicht) mit schützenden und/oder dekorativen Eigenschaften bildet. Unter schützenden Eigenschaften sind beispielsweise Kratzfestigkeit und Witterungsbeständigkeit, insbesondere UV-Beständigkeit, zu verstehen. Als dekorative Eigenschaft ist beispielsweise ein guter Glanz zu verstehen. In der Automobilserienlackierung kann es zum Überbrennen der resultierenden Mehrschichtlackierung kommen. Unter dem Begriff Überbrennen ist die Veränderung der Lackoberfläche durch lokale Überhitzung zu verstehen. Durch das Überbrennen verschlechtern sich insbesondere die Haftungseigenschaften der resultierenden Klarlackoberfläche beispielsweise für den Fall der Reparaturlackierung oder der Scheibenverklebung.

Die Haftung der Klarlackschicht wird häufig durch den Zusatz entsprechender Additive, insbesondere auf Silanbasis, verbessert. So ist es aus der WO07/137632 bekannt, die Haftung, insbesondere für die Scheibenverklebung von Automobilklarlacken, durch Zusatz von silanisierten Isocyanaten als Haftvermittler und von Diphosphonsäurediestern als Katalysator zu verbessern.

Außerdem ist es aus der EP-B-1 664 222 bekannt, die Haftung von Beschichtungsmitteln durch den Zusatz von fluorierten Urethanadditiven zu verbessern.

Ferner sind aus der WO97/03102 Beschichtungsmittel bekannt, die mindestens ein hydroxyfunktionelles Pol(meth)acrylatharz, mindestens einen hydroxyfunktionellen Polyester, mindestens ein blockiertes Isocyanat und mindestens ein Vernetzungsmittel auf Triazinbasis enthalten. Die Polyester sind dabei aufgebaut aus Polycarbonsäuren und drei- und/oder mehrwertigen Alkoholen sowie ggf. weiteren Aufbaukomponenten. Hierbei ist es wesentlich, dass das Poly(meth)acrylat zumindest teilweise in Gegenwart des Polyesters hergestellt wird. Die aus diesen Beschichtungsmitteln hergestellten Beschichtungen zeichnen sich durch eine hohe Säurebeständigkeit, hohe Schwitzwasserbeständigkeit und sehr guten Decklackstand aus. Angaben, wie die Haftung der Beschichtungen verbessert werden kann, sind in dieser Schrift jedoch nicht enthalten.

In den noch nicht offengelegten Europäischen Patentanmeldungen mit den Anmeldenummern EP13181559.9, EP13181764.5, EP13182100.1 sowie EP13182101.9 und in der internationalen Patentanmeldung Nr. PCT/EP2013/067742 sind wässrige pigmentierte Beschichtungsmittelzusammensetzungen beschrieben, die zur Verbesserung der Haftung das Reaktionsprodukt von Dimerfettsäuren mit Polyetherdiolen enthalten. Die Verwendung dieser Reaktionsprodukte in nichtwässrigen Beschichtungsmitteln ist in diesen Anmeldungen jedoch nicht beschrieben.

### Aufgabe

Aufgabe der vorliegenden Erfindung war es daher, nichtwässrige Beschichtungsmittelzusammensetzungen zur Verfügung zu stellen, die zu Beschichtungen, insbesonderte Klarlackschichten, mit einer verbesserten Haftung führen. Eine Verbesserung der Haftungseigenschaften soll, insbesondere nach dem Überbrennen, für die Reparaturlackierung und die Scheibenverklebung erzielt werden. Dabei soll zudem die Grundrezeptur eines herkömmlichen Klarlacksystems so wenig wie möglich verändert werden. Des Weiteren sollen die schützenden und dekorativen Eigenschaften des Klarlacks durch die Änderung nicht beeinträchtigt werden.

### Lösung der Aufgabe

Im Lichte der obengenannten Aufgabenstellung wurde eine nichtwässrige Beschichtungsmittelzusammensetzung gefunden, die A) mindestens eine polyhydroxylgruppenhaltige Komponente (A) und (B) mindestens eine polyisocyanatgruppenhaltige Komponente (B) enthält und die dadurch gekennzeichnet ist, dass die Beschichtungsmittelzusammensetzung mindestens ein von der Komponente (A) verschiedenes hydroxyfunktionelles Reaktionsprodukt (RP) enthält, das
(i) eine Säurezahl < 20 mg KOH/g besitzt und
(ii) herstellbar ist durch Umsetzung von mindestens einer Dimerfettsäure (a) mit mindestens einer aliphatischen, araliphatischen oder aromatischen dihydroxyfunktionellen Verbindung (b), wobei die dihydroxyfunktionelle Verbindung (b) ein zahlenmittleres Molekulargewicht von 120 bis 6000 g/mol aufweist.

Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack bzw. Anwendung des Beschichtungsverfahrens für die Automobilserienlackierung, die Automobilreparaturlackierung und/- oder für die Beschichtung von Automobil-Anbauteilen, von Kunststoffsubstraten und/oder von Nutzfahrzeugen.

Es wurde nun überraschenderweise gefunden, dass der Zusatz der erfindungsgemäß eingesetzten Reaktionsprodukte die Haftung der Klarlackschicht insbesondere im Falle des Überbrennens deutlich verbessert, ohne die übrigen guten Eigenschaften der Beschichtung, insbesondere deren Mikroeindringhärte, signifikant zu verschlechtern.

Ferner erfüllen die Beschichtungsmittelzusammensetzungen auch die üblicherweise an die Klarlackschicht bei der Automobilserienlackierung und der Automobilreparaturlackierung gestellten Anforderungen. Schließlich sind die Beschichtungsmittelzusammensetzungen einfach und sehr gut reproduzierbar herstellbar.

### Beschreibung der Erfindung

### Die erfindungsgemäßen Beschichtungsmittel

Im Rahmen der vorliegenden Erfindung wurden zur Bestimmung von nichtflüchtigen Anteilen (nfA, Festkörper) jeweils konstante Bedingungen gewählt, sofern nichts anderes angegeben wurde. Zur Bestimmung des nichtflüchtigen Anteils wird eine Menge von 1 g der jeweiligen Probe auf einen Festkörperdeckel aufgebracht und für 1 h bei 130°C erhitzt, auf Raumtemperatur abgekühlt und dann zurückgewogen (in Anlehnung an ISO 3251). Ermittelt wurde der nicht-flüchtige Anteil beispielsweise von entsprechenden Polymerlösungen beziehungsweise Harzen, die in der erfindungsgemäßen Beschichtungszusammensetzung enthalten sind, um dadurch beispielsweise den Gewichtsanteil des jeweiligen Bestandteils an einer Mischung mehrerer Bestandteile oder der gesamten Beschichtungszusammensetzung einstellen und bestimmen zu können.

Der Bindemittelanteil (auch nicht-flüchtiger Anteil oder Festkörpergehalt genannt) der einzelnen Komponenten (A) bzw. (B) bzw. (C) bzw. (RP) bzw. (E) des Beschichtungsmittels wird also dadurch bestimmt, dass eine kleine Probe der jeweiligen Komponente (A) bzw. (B) bzw. (C) bzw. (RP) bzw. (E) eingewogen und daran anschließend der Festkörper bestimmt wird, indem für 60 Minuten bei 130°C getrocknet wird, abgekühlt wird und dann erneut gewogen wird. Der Bindemittelanteil der Komponente in Gew.-% ergibt sich dann entsprechend aus 100 multipliziert mit dem Quotient aus dem Gewicht des Rückstandes der jeweiligen Probe nach Trocknung bei 130°C geteilt durch das Gewicht der jeweiligen Probe vor der Trocknung.

Im Falle von handelsüblichen Komponenten kann der Bindemittelanteil dieser Komponente auch hinreichend genau gleich dem angegebenen Festkörpergehalt gesetzt werden, sofern nichts anderes angegeben ist.

Der Bindemittelanteil der Beschichtungsmittelzusammensetzung wird rechnerisch aus der Summe der Bindemittelanteile der einzelnen Bindemittel- und Vernetzerkomponenten A), (B), (C), (RP) und (E) des Beschichtungsmittels ermittelt.

Im Rahmen der Erfindung gibt die Hydroxylzahl beziehungsweise OH-Zahl die Menge Kaliumhydroxid in Milligramm an, welche der bei einer Acetylierung von einem Gramm des jeweiligen Bestandteils gebundenen molaren Menge Essigsäure äquivalent ist. Die Hydroxylzahl wird im Rahmen der vorliegenden Erfindung, sofern nicht etwas anderes angegeben ist, gemäß DIN 53240-2 (Determination of hydroxyl value - Part 2: Method with catalyst) experimentell durch Titration bestimmt.

Im Rahmen der Erfindung gibt die Säurezahl die Menge Kaliumhydroxid in Milligramm an, welche zur Neutralisation von 1 g des jeweiligen Bestandteils notwendig ist. Die Säurezahl wird im Rahmen der vorliegenden Erfindung, sofern nicht etwas anderes angegeben ist, gemäß DIN EN ISO 2114 experimentell durch Titration bestimmt.

Das massenmittlere (Mw) und zahlenmittlere (Mn) Molekulargewicht wird im Rahmen der vorliegenden Erfindung mittels Gelpermeationschromatographie bei 35°C mit einer Hochdruckflüssigkeitschromatographie-Pumpe und einem Brechungs-indexdetektor bestimmt. Als Elutionsmittel wurde Tetrahydrofuran enthaltend 0.1Vol.-% Essigsäure mit einer Elutionsgeschwindigkeit von 1 ml/min verwendet. Die Kalibrierung wird mittels Polystyrol-Standards durchgeführt.

Die Glasübergangstemperatur Tg wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 10 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N2) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cp) erreicht ist. Sie wird aus dem DDK-Diagramm (Auftragung des Wärmestroms gegen die Temperatur) ermittelt und ist die Temperatur des Schnittpunkts der Mittellinie zwischen den extrapolierten Basislinien vor und nach dem Glasübergang mit der Messkurve.

### Die polyhydroxylgruppenhaltige Komponente (A)

Als polyhydroxylgruppenhaltige Komponente (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen zahlenmittlere Molekulargewichte Mn >= 300 g/mol, bevorzugt Mn = 400 - 30.000 g/mol, besonders bevorzugt Mn = 500 - 15.000 g/mol, und massenmittlere Molekulargewichte Mw > 500 g/mol, bevorzugt zwischen 800 und 100.000 g/mol, insbesondere zwischen 900 und 50.000 g/mol, gemessen mittels Gelpermeationschromatographie (GPC) gegen einen Polystyrolstandard auf.

Bevorzugt sind als Komponente (A) Polyesterpolyole, Polyacrylatpolyole und/oder Polymethacrylatpolyole sowie deren Mischpolymerisate - im folgenden Polyacrylat-polyole genannt -, Polyurethanpolyole, Polysiloxanpolyole und Mischungen dieser Polyole.

Die Polyole (A) weisen bevorzugt eine OH-Zahl von 30 bis 400 mg KOH/g, insbesondere zwischen 70 und 250 mg KOH/g, auf. Im Falle der Poly-(Meth)-Acrylat-Copolymerisate kann die OH-Zahl auch durch Berechnung auf Basis der eingesetzten OH-funktionellen Monomere ausreichend genau bestimmt werden.

Die Polyole (A) weisen bevorzugt eine Säurezahl zwischen 0 und 30 mg KOH/g auf.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C.

Polyurethanpolyole werden vorzugsweise durch Umsetzung von oligomeren Polyolen, insbesondere von Polyesterpolyol-Präpolymeren, mit geeigneten Di- oder Polyisocyanaten hergestellt und sind beispielsweise in EP-A-1 273 640 beschrieben. Insbesondere werden Umsetzungsprodukte von Polyesterpolyolen mit aliphatischen und/oder cycloaliphatischen Di- und/oder Polyisocyanaten eingesetzt.

Die erfindungsgemäß bevorzugt eingesetzten Polyurethanpolyole weisen ein zahlenmittleres Molekulargewicht Mn >= 300 g/mol, bevorzugt Mn = 700 - 2.000 g/mol, besonders bevorzugt Mn = 700 - 1.300 g/mol, sowie vorzugsweise ein massenmittleres Molekulargewicht Mw > 500 g/mol, bevorzugt zwischen 1.500 und 3.000 g/mol, insbesondere zwischen 1.500 und 2.700 g/mol auf, jeweils gemessen mittels Gelpermeationschromatographie (GPC) gegen einen Polystyrolstandard.

Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Als polyhydroxylgruppenhaltige Komponente (A) werden besonders bevorzugt von dem Reaktionsprodukt (RP) verschiedene Polyesterpolyole, Polyacrylatpolyole, Polymethacrylatpolyole, Polyurethanpolyole oder deren Mischungen und ganz besonders bevorzugt Mischungen von Poly(meth)acrylatpolyolen eingesetzt.

Die erfindungsgemäß bevorzugt eingesetzten Polyesterpolyole (A) weisen ein zahlenmittleres Molekulargewicht Mn >= 300 g/mol, bevorzugt Mn = 400 - 10.000 g/mol, besonders bevorzugt Mn = 500 - 5.000 g/mol, sowie vorzugsweise ein massenmittleres Molekulargewicht Mw > 500 g/mol, bevorzugt zwischen 800 und 50.000 g/mol, insbesondere zwischen 900 und 10.000 g/mol auf, jeweils gemessen mittels Gelpermeationschromatographie (GPC) gegen einen Polystyrolstandard.

Die erfindungsgemäß bevorzugt eingesetzten Polyesterpolyole (A) weisen bevorzugt eine OH-Zahl von 30 bis 400 mg KOH/g, insbesondere zwischen 100 und 250 mg KOH/g, auf.

Die erfindungsgemäß bevorzugt eingesetzten Polyesterpolyole (A) weisen bevorzugt eine Säurezahl zwischen 0 und 30 mg KOH/g auf.

Geeignete Polyesterpolyole sind beispielsweise auch in EP-A-0 994 117 und EP-A-1 273 640 beschrieben.

Die erfindungsgemäß bevorzugt eingesetzten Poly(meth)acrylatpolyole (A) sind in der Regel Copolymerisate und weisen vorzugsweise ein zahlenmittleres Molekulargewicht Mn >= 300 g/mol, bevorzugt Mn = 500 - 15.000 g/mol, besonders bevorzugt Mn = 900 - 10.000 g/mol, sowie vorzugsweise massenmittlere Molekulargewichte Mw zwischen 500 und 20.000 g/mol, insbesondere zwischen 1.000 und 15.000 g/mol auf, jeweils gemessen mittels Gelpermeationschromatographie (GPC) gegen einen Polystyrolstandard.

Die Glasübergangstemperatur der Copolymerisate liegt in der Regel zwischen -100 und 100 °C, insbesondere zwischen -60 und < 50 °C (gemessen mittels DSC-Messungen nach DIN-EN-ISO 11357-2).

Die Poly(meth)acrylatpolyole (A) weisen bevorzugt eine OH-Zahl von 60 bis 300 mg KOH/g, insbesondere zwischen 70 und 250 mg KOH/g, sowie eine Säurezahl zwischen 0 und 30 mg KOH/g auf.

Die Hydroxylzahl (OH-Zahl) und die Säurezahl werden wie oben beschrieben bestimmt (DIN 53240-2 bzw. DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

### Die polyisocyanatgruppenhaltige Komponente (B)

Als Komponente (B) geeignet sind an sich bekannte substituierte oder unsubstituierte aromatische, aliphatische, cycloaliphatische und/oder heterocyclische Polyisocyanate. Beispiele für bevorzugte Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexan-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Bevorzugte Polyisocyanate sind auch die Biuret-Dimere und die Isocyanurat-Trimere der vorgenannten Diisocyanate. Besonders bevorzugte Polyisocyanate (B) sind Hexamethylen-1,6-diisocyanat, Isophorondiisocyanat und 4,4'-Methylendicyclohexyldiisocyanat, deren Biuret-Dimere und/oder deren Isocyanurat-Trimere und/oder deren asymmetrische Trimere, wie z:B. das im Handel unter der Bezeichnung Desmodur® N3900 erhältliche asymmetrische HDI-Trimer.

In einer weiteren Ausführungsform der Erfindung sind als Komponente (B) geeignet Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.

Die Komponente (B) kann in einem geeigneten Lösemittel (L) vorliegen. Geeignete Lösemittel (L) sind solche, die eine ausreichende Löslichkeit der Polyisocyanatkomponente ermöglichen und frei von gegenüber Isocyanaten reaktiven Gruppen sind. Beispiele für solche Lösemittel sind Aceton, Methylethylketon, Cyclohexanon, Methylisobutylketon, Methylisoamylketon, Diisobutylketon, Ethylacetat, n-Butylacetat, Ethylenglykoldiacetat, Butyrolacton, Diethylcarbonat, Propylencarbonat, Ethylencarbonat, N,N-Dimethylformamid, N,N-Dimethylacetamid, N-Methylpyrrolidon, N-Ethylpyrrolidon, Methylal, Butylal, 1,3-Dioxolan, Glycerolformal, Benzol, Toluol, Xylol, n-Hexan, Cyclohexan, Solventnaphtha®, 2-Methoxypropylacetat (MPA), und Ethylethoxypropionat.

### Die hydroxylgruppenhaltige Komponente (C)

Die erfindungsgemäßen Beschichtungsmittelzusammensetzungen können ggf. außer der polyhydroxylgruppenhaltigen Komponente (A) und außer dem hydroxylgruppenhaltigen Reaktionsprodukt (RP) noch ein oder mehrere, von der Komponente (A) und von dem Reaktionsprodukt (RP) verschiedene, monomere hydroxylgruppenhaltige Komponenten (C) enthalten. Bevorzugt nehmen diese Komponenten (C) einen Anteil von 0 bis 10 Gew.-%, besonders bevorzugt von 0 bis 5 Gew.-%, jeweils bezogen auf den Bindemittelanteil der Beschichtungsmittelzusammensetzung (also jeweils bezogen auf die Summe aus dem Bindemittelanteil der Komponente (A) plus dem Bindemittelanteil der Komponente (B) plus dem Bindemittelanteil der Komponente (C) plus dem Bindemittelanteil der Komponente (RP) plus dem Bindemittelanteil der Komponente (E)), ein.

Als hydroxylgruppenhaltige Komponente (C) werden niedermolekulare Polyole eingesetzt.

Als niedermolekulare Polyole werden beispielsweise Diole, wie bevorzugt Ethylenglykol, Di- und Tri-ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole (C) in untergeordneten Anteilen der Polyolkomponente (A) beigemischt.

### Das hydroxyfunktionelle Reaktionsprodukt (RP)

Es ist erfindungswesentlich, dass die Beschichtungsmittelzusammensetzung mindestens ein von der Komponente (A) und von der Komponente (C) verschiedenes hydroxyfunktionelles Reaktionsprodukt (RP), bevorzugt genau ein Reaktionsprodukt (RP), enthält.

Die Reaktionsprodukte sind im Wesentlichen linear. Lineare Reaktionsprodukte können grundsätzlich durch die Umsetzung von difunktionellen Reaktanten erhalten werden, wobei dann durch die Verknüpfung der Reaktanten über Reaktion der funktionellen Gruppen eine lineare, das heißt kettenartige Struktur entsteht. Beispielsweise gilt damit für den Fall, dass das Reaktionsprodukt ein Polymer ist, dass das Rückgrat einen linearen Charakter hat. Insbesondere handelt es sich bei dem Reaktionsprodukt um einen Polyester, bei dem als Reaktanten Diole und Dicarbonsäuren eingesetzt werden, wobei dann in dem Reaktionsprodukt die Abfolge von Esterbindungen linearen Charakter hat. Bevorzugt werden bei der Herstellung des Reaktionsproduktes (RP) also hauptsächlich difunktionelle Reaktanten eingesetzt. Andere Reaktanten wie insbesondere monofunktionelle Verbindungen werden demnach bevorzugt nicht oder nur in untergeordneten Mengen eingesetzt. Insbesondere werden mindestens 80 mol-%, bevorzugt mindestens 90 mol-%, ganz besonders bevorzugt ausschließlich difunktionelle Reaktanten eingesetzt. Sofern andere Reaktanten eingesetzt werden, werden diese bevorzugt ausschließlich aus der Gruppe der monofunktionellen Reaktanten ausgewählt. Bevorzugt ist aber, dass ausschließlich difunktionelle Reaktanten eingesetzt werden.

Das Reaktionsprodukt ist hydroxyfunktionell. Bevorzugt ist, dass die Reaktanten so umgesetzt werden, dass dabei entstehende lineare Moleküle zwei endständige Hydroxylgruppen aufweisen. Das heißt, dass an den beiden Enden dieser Moleküle jeweils eine Hydroxylgruppe vorhanden ist.

Das Reaktionsprodukt hat eine Säurezahl von kleiner 20, bevorzugt kleiner 15, insbesondere bevorzugt kleiner 10 und ganz besonders bevorzugt kleiner 5 mg KOH/g. Es weist also bevorzugt eine nur sehr geringe Menge an Carbonsäuregruppen auf. Die Säurezahl wird im Rahmen der vorliegenden Erfindung, sofern nicht explizit anders angegeben, gemäß DIN 53402 bestimmt. Sie bezieht sich also auf das Reaktionsprodukt an sich, das heißt auf den Festkörper = nicht-flüchtiger Anteil (zur Bestimmung der Festkörpers siehe oben).

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

Die beschriebene Hydroxyfunktionalität lässt sich genauso wie die geringe Säurezahl beispielsweise in an sich bekannter Weise durch den Einsatz entsprechender Verhältnisse von Reaktanten mit entsprechenden funktionellen Gruppen erhalten. Im vorliegenden Fall, dass bei der Herstellung dihydroxyfunktionelle und dicarboxyfunktionelle Reaktanten eingesetzt werden, wird also ein entsprechender Überschuss der dihydroxyfunktionellen Komponente eingesetzt. In diesem Zusammenhang sei noch folgendes erläutert. Schon aus rein statistischen Gründen werden bei einer realen Umsetzung selbstverständlich nicht nur Moleküle erhalten, die beispielsweise die gewünschte (Di)-Hydroxyfunktionalität aufweisen. Durch die Wahl entsprechender Bedingungen, beispielsweise eines Überschusses an dihydroxyfunktionellen Reaktanten, und Führung der Reaktion bis zum Erhalt der gewünschten Säurezahl, ist aber garantiert, dass die das Reaktionsprodukt ausmachenden Umsetzungsprodukte beziehungsweise Moleküle im Mittel jedenfalls hydroxyfunktionell sind. Der Fachmann weiß entsprechende Bedingungen zu wählen.

Das zahlenmittlere Molekulargewicht der Reaktionsprodukte kann breit variieren und liegt bevorzugt von 600 bis 40.000 g/mol, insbesondere von 800 bis 10.000 g/mol, ganz besonders bevorzugt von 1200 bis 5000 g/mol. Das zahlenmittlere Molekulargewicht wird im Rahmen der vorliegenden Erfindung, sofern nicht explizit anders angegeben, mittels Dampfdruckosmose bestimmt. Gemessen wurde mittels eines Dampfdruckosmometers (Modell 10.00, Fa. Knauer) an Konzentrationsreihen der zu untersuchenden Komponente in Toluol bei 50°C mit Benzophenon als Eichsubstanz zur Bestimmung der experimentellen Eichkonstante des eingesetzten Messgeräts (nach E. Schröder, G. Müller, K.-F. Arndt, "Leitfaden der Polymercharakterisierung", Akademie-Verlag, Berlin, S. 47 - 54, 1982, wobei darin Benzil als Eichsubstanz eingesetzt wurde).

Die erfindungsgemäß eingesetzten Reaktionsprodukte (RP) sind herstellbar durch Umsetzung von mindestens einer Dimerfettsäure (a) mit mindestens einer aliphatischen, araliphatischen oder aromatischen dihydroxyfunktionellen Verbindung (b), wobei die dihydroxyfunktionelle Verbindung (b) ein zahlenmittleres Molekulargewicht von 120 bis 6000 g/mol aufweist.

Als Dimerfettsäuren (seit langem auch bekannt als dimerisierte Fettsäuren oder Dimersäuren) werden allgemein und insbesondere im Rahmen der vorliegenden Erfindung Gemische bezeichnet, die durch Oligomerisierung von ungesättigten Fettsäuren hergestellt werden. Sie sind beispielsweise herstellbar durch katalytische Dimerisierung von pflanzlichen, ungesättigten Fettsäuren, wobei als Ausgangsstoffe insbesondere ungesättigte C12-bis C22-Fettsäuren eingesetzt werden. Die Verknüpfung verläuft vornehmlich nach dem Diels-Alder-Typ und es resultieren, je nach Zahl und Lage der Doppelbindungen der zur Herstellung der Dimerfettsäuren eingesetzten Fettsäuren, Gemische aus vornehmlich dimeren Produkten, die zwischen den Carboxylgruppen cycloaliphatische, linear-aliphatische, verzweigt aliphatische und auch C6-aromatische Kohlenwasserstoffgruppen aufweisen. Je nach Mechanismus und/oder gegebenenfalls nachträglicher Hydrierung können die aliphatischen Reste gesättigt oder ungesättigt sein und auch der Anteil von aromatischen Gruppen kann variieren. Die Reste zwischen den Carbonsäuregruppen enthalten dann beispielsweise 24 bis 44 Kohlenstoffatome. Bevorzugt werden zur Herstellung Fettsäuren mit 18 Kohlenstoffatomen eingesetzt, sodass das dimere Produkt also 36 Kohlenstoffatome aufweist. Vorzugsweise weisen die Reste, welche die Carboxylgruppen der Dimerfettsäuren verbinden, keine ungesättigten Bindungen und keine aromatischen Kohlenwasserstoffreste auf.

Im Sinne der vorliegenden Erfindung werden bei der Herstellung also bevorzugt C₁₈-Fettsäuren eingesetzt. Besonders bevorzugt werden Linolen-, Linol- und/oder Ölsäure eingesetzt.

In Abhängigkeit von der Reaktionsführung entstehen bei der oben bezeichneten Oligomerisierung Gemische, die hauptsächlich dimere, aber auch trimere Moleküle sowie monomere Moleküle und sonstige Nebenprodukte enthält. Üblicherweise wird destillativ gereinigt. Handelsübliche Dimerfettsäuren enthalten im Allgemeinen mindestens 80 Gew.-% dimere Moleküle, bis zu 19 Gew.-% trimere Moleküle und maximal 1 Gew.-% monomerer Moleküle und sonstiger Nebenprodukte.

Es ist bevorzugt, Dimerfettsäuren (a) einzusetzen, die zu mindestens 90 Gew.-%, bevorzugt zu mindestens 95 Gew.-%, ganz besonders bevorzugt zu mindestens 98 Gew.-% aus dimeren Fettsäuremolekülen bestehen.

Im Sinne der vorliegenden Erfindung ist es bevorzugt, dass die zur Herstellung des Reaktionsproduktes (RP) eingesetzte Dimerfettsäure (a) zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten besteht. Es ist besonders bevorzugt, Dimerfettsäuren einzusetzen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden Dimerfettsäuren eingesetzt, die zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten bestehen. Die Bestimmung der Anteile von monomeren, dimeren und trimeren Molekülen sowie sonstigen Nebenprodukten in den Dimerfettsäuren kann beispielsweise mittels Gaschromatografie (GC) erfolgen. Dabei werden die Dimerfettsäuren vor der GC-Analyse über die Bortrifluorid-Methode zu den entsprechenden Methylestern umgesetzt (vergleiche DIN EN ISO 5509) und dann mittels GC analysiert.

Als grundlegendes Kennzeichen für "Dimerfettsäuren" gilt im Rahmen der vorliegenden Erfindung also, dass deren Herstellung die Oligomerisierung von ungesättigten Fettsäuren umfasst. Bei dieser Oligomerisierung entstehen vornehmlich, das heißt bevorzugt zu mindestens 80 Gew.-%, besonders bevorzugt zu mindestens 90 Gew.-%, ganz besonders bevorzugt zu mindestens 95 Gew.-% und insbesondere zu mindestens 98 Gew.-% dimere Produkte. Die Tatsache, dass bei der Oligomerisierung also überwiegend dimere Produkte entstehen, die genau zwei Fettsäuremoleküle enthalten, rechtfertigt diese ohnehin gängige Benennung. Ein alternativer Ausdruck für den einschlägigen Begriff "Dimerfettsäuren" ist also "Gemisch enthaltend dimerisierte Fettsäuren". Durch den Einsatz von dimeren Fettsäuren wird also automatisch der Einsatz von difunktionellen Verbindungen (a) realisiert. Dies rechtfertigt auch die im Rahmen der vorliegenden Erfindung gewählte Angabe, dass Dimerfettsäuren als Verbindung (a) eingesetzt werden. Denn Verbindungen (a) sind augenscheinlich der Hauptbestandteil der als Dimerfettsäuren bezeichneten Gemische. Dass Dimerfettsäuren als Verbindungen (a) eingesetzt werden, meint also, dass diese Verbindungen (a) in Form von entsprechenden Gemischen mit wie oben beschriebenen monomeren und/oder trimeren Molekülen und/oder sonstigen Nebenprodukten eingesetzt werden.

In einer besonders bevorzugten Ausführungsform des erfindungsgemäß eingesetzten Reaktionsproduktes (RP) wird die Dimerfettsäure (a) aus Linolen-, Linol- und/oder Ölsäure hergestellt und/oder besteht zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten und besitzt eine Iodzahl von ≤ 10 g/100 g.

Die einzusetzenden Dimerfettsäuren sind als Handelsprodukte zu erhalten. Zu nennen sind beispielsweise Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Croda, Empol 1008, Empol 1061 und Empol 1062 der Firma BASF sowie Unidyme 10 und Unidyme TI der Firma Arizona Chemical.

Bevorzugte Reaktionsprodukte (RP) sind herstellbar durch Umsetzung von Dimerfettsäuren mit aliphatischen, araliphatischen oder aromatischen dihydroxyfunktionellen Verbindungen (b). Aliphatische Verbindungen sind organische Verbindungen, die nicht aromatisch sind. Sie können linear, cyclisch oder verzweigt sein. Möglich sind beispielsweise Verbindungen, die aus zwei Hydroxylgruppen und einem aliphatischen Kohlenwasserstoffrest bestehen. Möglich sind auch Verbindungen, die neben den in den beiden Hydroxylgruppen enthaltenen Sauerstoffatomen weitere Heteroatome wie Sauerstoff oder Stickstoff, insbesondere Sauerstoff enthalten, beispielsweise in Form von verknüpfenden Ether- und/oder Esterbindungen. Araliphatische Verbindungen sind solche, die sowohl aliphatische als auch aromatische Struktureinheiten enthalten. Bevorzugt ist aber, dass die Reaktionsprodukte (RP) durch Umsetzung von Dimerfettsäuren mit aliphatischen dihydroxyfunktionellen Verbindungen (b) hergestellt werden.

Die aliphatischen, araliphatischen oder aromatischen dihydroxyfunktionellen Verbindungen (b) haben ein zahlenmittleres Molekulargewicht von 120 bis 6000 g/mol, insbesondere von 200 bis 4500 g/mol.

Die Angabe eines zahlenmittleren Molekulargewichts impliziert also, dass es sich bei den bevorzugten dihydroxyfunktionellen Verbindungen um Mischungen von verschieden großen dihydroxyfunktionellen Molekülen handelt.

Bevorzugt werden erfindungsgemäß außerdem Reaktionsprodukte (RP) eingesetzt, bei denen die Komponenten (a) und (b) in einem molaren Verhältnis von 0,7/2,3 bis 1,6/1,7, besonders bevorzugt von 0,8/2,2 bis 1,6/1,8 und ganz besonders bevorzugt von 0,9/2,1 bis 1,5/1,8 eingesetzt werden. Durch den Überschuss von Hydroxylgruppen werden damit hydroxyfunktionelle Reaktionsprodukte erhalten, die zudem eine geringe Säurezahl aufweisen. Durch die Höhe des Überschusses kann das Molekulargewicht des Reaktionsproduktes gesteuert werden. Wird ein nur geringer Überschuss des hydroxyfunktionellen Reaktanten eingesetzt, entstehen entsprechend langkettigere Produkte, da nur dann eine möglichst vollständige Umsetzung der vorhandene Säuregruppen garantiert ist. Bei einem höheren Überschuss des hydroxyfunktionellen Reaktanten entstehen entsprechend kurzkettigere Reaktionsprodukte. Das zahlenmittlere Molekulargewicht der Reaktionsprodukte wird natürlich auch vom Molekulargewicht der Reaktanten, beispielsweise den bevorzugt aliphatischen dihydroxyfunktionellen Verbindungen, beeinflusst. Das zahlenmittlere Molekulargewicht der bevorzugten Reaktionsprodukte kann breit variieren und liegt bevorzugt von 600 bis 40.000 g/mol, insbesondere von 800 bis 10.000 g/mol, ganz besonders bevorzugt von 1200 bis 5000 g/mol.

Die bevorzugten Reaktionsprodukte können also auch als lineare blockartige Verbindungen B-(A-B)n beschrieben werden. Die Blöcke A basieren auf Dimerfettsäuren und die Blöcke B basieren auf aliphatischen dihydroxyfunktionellen Verbindungen.

Bevorzugt sind die dihydroxyfunktionellen Verbindungen (b) ausgewählt aus der Gruppe bestehend aus
(1) mindestens einem Polyetherdiol (b1) der allgemeinen Strukturformel (I) 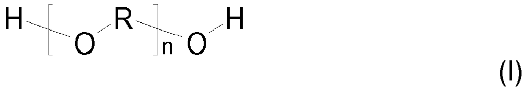 wobei es sich bei R um einen C₃- bis C₆-Alkylenrest handelt und n entsprechend so gewählt ist, dass das Polyetherdiol (b1) ein zahlenmittleres Molekulargewicht von 120 bis 6.000 g/mol besitzt,
   und/oder
(2) mindestens einem Polyesterdiol (b2) der allgemeinen Strukturformel (11) 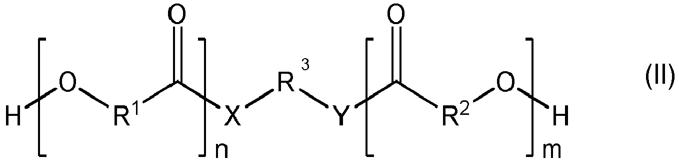 wobei
   R³ für einen divalenten organischen Rest umfassend 2 bis 10 Kohlenstoffatome steht,
   R¹ und R² unabhängig voneinander für geradkettige oder verzweigte Alkylenreste mit 2 bis 10 Kohlenstoffatomen stehen,
   X und Y unabhängig voneinander für O, S oder NR⁴ stehen, worin R⁴ für Wasserstoff oder einen Alkylrest mit 1 bis 6 Kohlenstoffatomen steht, und
   m und n entsprechend so gewählt sind, dass das Polyesterdiol (b2) ein zahlenmittleres Molekulargewicht von 450 bis 2200 g/mol besitzt, und/oder
(3) mindestens einem Dimerdiol (b3).

Die Herstellung des erfindungsgemäß eingesetzten Reaktionsproduktes (RP) weist keine Besonderheiten auf. Üblicherweise erfolgt die Veresterung mit Hilfe eines Wasserabscheiders. Die Reaktion wird abgebrochen, wenn das Reaktionsprodukt die gewünschte Säurezahl von < 20 mgKOH/g besitzt.

Besonders bevorzugt werden erfindungsgemäß Reaktionsprodukte (RP) eingesetzt, die herstellbar sind durch Umsetzung von mindestens einer Dimerfettsäure (a) mit mindestens einem Polyetherdiol (b1) der allgemeinen Strukturformel (I).

In dem Polyetherdiol (b1) können alle n Reste R gleich sein. Ebenso ist es aber auch möglich, dass unterschiedliche Arten von Resten R vorhanden sind. Bevorzugt sind alle Reste R gleich. n ist entsprechend so zu wählen, dass das Polyetherdiol (b1) ein zahlenmittleres Molekulargewicht von 120 bis 6000 g/mol besitzt.

Bei R handelt es sich bevorzugt um einen C₃- oder einen C₄-Alkylenrest. Insbesondere handelt es sich bei der Gruppe R gemäß der allgemeinen Strukturformel (I) um Propylenreste oder iso-Propylenreste oder Tetramethylenreste, insbesondere um Tetramethylenreste.

Ganz besonders bevorzugt werden erfindungsgemäß Reaktionsprodukte (RP) eingesetzt, die eine Säurezahl < 10 mgKOH/g und ein zahlenmittleres Molekulargewicht von 1500 bis 5000 g/mol, bevorzugt 2000 bis 4500 g/mol und besonders bevorzugt von 2500 bis 4000 g/mol besitzen und herstellbar sind durch Umsetzung von mindestens einer Dimerfettsäure (a) mit mindestens einem Polyetherdiol (b1) der allgemeinen Strukturformel (I), wobei das Polyetherdiol (b1) ein zahlenmittleres Molekulargewicht von 450 bis 2200 g/mol besitzt. Besonders bevorzugt besitzt das Polyetherdiol (b1) ein zahlenmittleres Molekulargewicht von 700 bis 1400 g/mol und ganz besonders bevorzugt von 800 bis 1200 g/mol. Das zahlenmittlere Molekulargewicht wird mittels Gelpermeationschromatographie gegen einen Polymethylmethacrylatstandard gemessen; Eluent: Tetrahydrofuran. Hierbei werden die Komponenten (a) und (b1) insbesondere in einem molaren Verhältnis von 0,7/2,3 bis 1,3/1,7, bevorzugt 0,9/2,1 bis 1,1/1,9, eingesetzt. Diese Reaktionsprodukte sind in der nicht vorveröffentlichten internationalen Patentanmeldung PCT/EP2013/067742 beschrieben.

Insbesondere werden in dieser bevorzugten Ausführungsform Polyetherdiole (b1) eingesetzt, bei denen es sich bei der Gruppe R gemäß der allgemeinen Strukturformel (I) um Propylenreste oder iso-Propylenreste oder Tetramethylenreste, insbesondere um Tetramethylenreste, handelt.

Erfindungsgemäß ganz besonders bevorzugt werden in den Beschichtungsmittelzusammensetzungen Reaktionsprodukte (RP) eingesetzt, die ein zahlenmittleres Molekulargewicht von 2500 bis 4000 g/mol und eine Säurezahl < 5 mgKOH/g besitzen und die herstellbar sind durch Umsetzung von mindestens einer Dimerfettsäure (a) mit mindestens einem Polyetherdiol (b1) der allgemeinen Strukturformel (I), wobei das Polyetherdiol (b1) ein zahlenmittleres Molekulargewicht von 800 bis 1200 g/mol besitzt und die Komponenten (a) und (b1) in einem molaren Verhältnis von 0,9/2,1 bis 1,1/1,9 eingesetzt werden.

Bevorzugt werden in den Beschichtungsmittelzusammensetzungen außerdem Reaktionspprodukte (RP) eingesetzt, die herstellbar sind durch Umsetzung von mindestens einer Dimerfettsäure (a) mit mindestens einem Polyetherdiol (b1) der allgemeinen Strukturformel (I), wobei das Polyetherdiol (b1) ein zahlenmittleres Molekulargewicht von 2250 bis 6000 g/mol, insbesondere von 2500 bis 4800 g/mol, besitzt, die Komponenten (a) und (b1) in einem molaren Verhältnis von 0,7/2,3 bis 1,6/1,7, insbesondere von 0,9/2,1 bis 1,5/1,8, eingesetzt werden und das Reaktionsprodukt (RP) ein zahlenmittleres Molekulargewicht von 4.800 bis 40.000 g/mol, insbesondere von 5.000 bis 30.000 g/mol, und bevorzugt eine Säurezahl < 10 mgKOH/g besitzt. Diese Reaktionsprodukte sind in der nicht vorveröffentlichten europäischen Patentanmeldung EP13181764.5 beschrieben.

Ebenfalls bevorzugt werden in den Beschichtungsmittelzusammensetzungen Reaktionsprodukte (RP) eingesetzt, die herstellbar sind durch Umsetzung von mindestens einer Dimerfettsäure (a) mit mindestens einem Polyetherdiol (b1) der allgemeinen Strukturformel (I), wobei das Polyetherdiol (b1) ein zahlenmittleres Molekulargewicht von von 120 bis 445 g/mol, insbesondere von 170 bis 350 g/mol, besitzt, die Komponenten (a) und (b1) in einem molaren Verhältnis von 0,7/2,3 bis 1,6/1,7, insbesondere von 0,9/2,1 bis 1,5/1,8, eingesetzt werden und das Reaktionsprodukt (RP) ein zahlenmittleres Molekulargewicht von 600 bis 4000 g/mol, insbesondere von 800 bis 3500 g/mol, und bevorzugt eine Säurezahl < 10 mgKOH/g besitzt. Diese Reaktionsprodukte sind in der nicht vorveröffentlichten europäischen Patentanmeldung EP 13185581.9 beschrieben.

Daneben können in den erfindungsgemäßen Beschichtungsmitteln auch Reaktionsprodukte (RP) eingesetzt werden, die herstellbar sind durch Umsetzung von mindestens einer Dimerfettsäure (a) mit mindestens einem Polyesterdiol (b2) der allgemeinen Strukturformel (II), wobei R³ für einen divalenten organischen Rest umfassend 2 bis 10 Kohlenstoffatome steht, R¹ und R² unabhängig voneinander für geradkettige oder verzweigte Alkylenreste mit 2 bis 10 Kohlenstoffatomen stehen, X und Y unabhängig voneinander für O, S oder NR⁴ stehen, worin R⁴ für Wasserstoff oder einen Alkylrest mit 1 bis 6 Kohlenstoffatomen steht, und m und n entsprechend so gewählt sind, dass das Polyesterdiol (b2) ein zahlenmittleres Molekulargewicht von 450 bis 2200 g/mol, bevorzugt von 500 bis 1400 g/mol, besitzt, und wobei die Komponenten (a) und (b) in einem molaren Verhältnis von 0,7/2,3 bis 1,3/1,7, bevorzugt von 0,9/2,1 bis 1,1/1,9, eingesetzt werden und das resultierende Dimerfettsäure-Polyesterdiol-Reaktionsprodukt ein zahlenmittleres Molekulargewicht von 1200 bis 5000 g/mol, bevorzugt 1200 bis 4500 g/mol, und bevorzugt eine Säurezahl von kleiner 10 mgKOH/g besitzt.

Vorzugsweise steht R³ für einen organischen Rest umfassend 2 bis 10 Kohlenstoffatome und vorzugsweise 2 bis 6 Kohlenstoffatome. Der Rest R³ kann beispielsweise aliphatisch, aromatisch oder araliphatisch sein. Der Rest R³ kann neben Kohlenstoffatomen und Wasserstoffatomen auch Heteroatome wie beispielsweise O oder N enthalten. Er kann gesättigt oder ungesättigt sein. Vorzugsweise steht R³ für einen aliphatischen Rest mit 2 bis 10 Kohlenstoffatomen, besonders bevorzugt für einen aliphatischen Rest mit 2 bis 6 Kohlenstoffatomen und ganz besonders bevorzugt für einen aliphatischen Rest mit 2 bis 4 Kohlenstoffatomen. Beispielsweise steht der Rest R³ für C₂H₄, C₃H₆, C₄H₈ oder C₂H₄-O-C₂H₄.

R¹ und R² stehen unabhängig voneinander für geradkettige oder verzweigte Alkylenreste mit 2 bis 10 Kohlenstoffatomen, vorzugsweise 2 bis 6 Kohlenstoffatomen und besonders bevorzugt 3 bis 5 Kohlenstoffatomen. Vorzugsweise enthalten diese Reste nur Kohlenstoff und Wasserstoff.

In dem Polyesterdiol (b2) können alle n Reste R¹ und alle m Reste R² gleich sein. Ebenso ist es aber auch möglich, das unterschiedliche Arten von Resten R¹ und R² im Polyesterdiol vorhanden sind. Bevorzugt sind alle Reste R¹ und R² gleich.

Bei R¹ und R² handelt es sich ganz besonders bevorzugt um einen C₄- oder einen C₅-Alkylenrest, insbesondere um einen Tetramethylen- oder Pentamethylenrest. In einer ganz besonders bevorzugten Ausführungsform der vorliegenden Erfindung stehen beide Reste R¹ und R² für Pentamethylenreste.

Als Hydroxycarbonsäuren HO-R1-COOH und HO-R2-COOH oder deren Lactone werden ganz besonders bevorzugt 5-Hydroxypentansäure beziehungsweise delta-Valerolacton und 6-Hydroxyhexansäure beziehungsweise epsilon-Caprolacton eingesetzt. Sollen die erfindungsgemäß einzusetzenden Polyesterdiole und die daraus hergestellten erfindungsgemäßen Dimerfettsäure-Polyesterdiol Reaktionsprodukte eine besonders niedrige Kristallisationsneigung besitzen, so empfiehlt sich der Einsatz von Mischungen mindestens zweier verschiedener Hydroxycarbonsäuren oder der korrespondierenden Lactone.

X und Y stehen unabhängig voneinander für O, S oder NR⁴, worin R⁴ für Wasserstoff oder einen Alkylrest mit 1 bis 6 Kohlenstoffatomen steht. Vorzugsweise stehen X und Y unabhängig voneinander für O oder NR⁴, besonders bevorzugt stehen diese unabhängig voneinander für O und NH, ganz besonders bevorzugt stehen X und Y für O.

Die Indizes m und n sind entsprechend so gewählt, dass das Polyesterdiol ein zahlenmittleres Molekulargewicht von 450 bis 2200 g/mol, vorzugsweise 500 bis 1400 g/mol, besonders bevorzugt 500 bis 1200 g/mol besitzt.

Die Polyesterpolyole der allgemeinen Strukturformel (II) lassen sich in einer ersten Route herstellen, indem Verbindungen HX-R-YH als sogenannte Starterverbindungen fungieren und durch Ringöffnungspolymerisation von Lactonen der Hydroxycarbonsäuren HO-R¹-COOH und HO-R²-COOH die hydroxyterminierten Polyesterketten an die Starterverbindung polymerisiert werden. Nach einer zweiten Route können natürlich auch zuerst alpha-Hydroxy-gamma-Carboxy-terminierte Polyester hergestellt werden, beispielsweise durch Ringöffnungspolymerisation von Lactonen der Hydroxycarbonsäuren HO-R¹-COOH und HO-R²-COOH oder durch Polykondensation der Hydroxycarbonsäuren HO-R¹-COOH und HO-R²-COOH. Die alpha-Hydroxy-gamma-Carboxy-terminierten Polyester können dann wiederum mit Verbindungen HX-R-YH mittels einer Kondensationsreaktion zu den erfindungsgemäß einzusetzenden Polyesterdiolen umgesetzt werden.

Entsprechende Verfahren sind beispielsweise in der Deutschen Offenlegungsschrift 2234265 "Hydroxylendständige Polylactone" des Anmelders Stamicarbon N.V. beschrieben.

Die Dimerfettsäuren und die Verbindungen der Formel (II) werden hier bevorzugt in einem molaren Verhältnis von 0,7/2,3 bis 1,3/1,7 eingesetzt. Das resultierende Reaktionsprodukt besitzt in dieser Ausführungsform bevorzugt ein zahlenmittleres Molekulargewicht von 1200 bis 5000 g/mol, bevorzugt 1200 bis 4500 g/mol und ganz besonderes bevorzugt 1200 bis 4000 g/mol.Diese Reaktionsprodukte sind in der nicht vorveröffentlichten europäischen Patentanmeldung EP13197872.8 beschrieben.

Weitere bevorzugte Verbindungen (b3) sind Dimerdiole beziehungsweise sind in Dimerdiolen enthalten. Dimerdiole sind seit langem bekannt und werden in der wissenschaftlichen Literatur auch als dimere Fettalkohole bezeichnet. Es handelt sich hierbei um Gemische, die beispielsweise durch Oligomerisierung von ungesättigten Fettsäuren oder deren Estern und anschließender Hydrierung der Säure- oder Estergruppen oder durch Oligomerisierung von ungesättigten Fettalkoholen hergestellt werden. Als Ausgangsstoffe können ungesättigte C12- bis C22-Fettsäuren oder deren Ester oder ungesättigte C12- bis C22-Fettalkohole eingesetzt werden. Die Kohlenwasserstoffreste, welche die Hydroxylgruppen in den Dimerdiolen verbinden sind definiert wie die Kohlenwasserstoffreste, welche die Carboxylgruppen der Dimerfettsäuren trennen.

So wird beispielsweise in der DE-11 98 348 ihre Herstellung durch Dimerisierung von ungesättigten Fettalkoholen mit basischen ErdalkalimetallVerbindungen bei mehr als 280 °C beschrieben.

Sie können auch durch Hydrierung von wie oben beschriebenen Dimerfettsäuren und/oder deren Estern gemäß der deutschen Auslegeschrift DE-B-17 68 313 hergestellt werden. Unter den darin beschriebenen Umständen werden nicht nur die Carboxylgruppen der Fettsäuren zu Hydroxylgruppen hydriert, sondern auch gegebenenfalls noch in den Dimerfettsäuren bzw. deren Estern enthaltene Doppelbindungen zum Teil oder vollständig hydriert. Es ist aber auch möglich, die Hydrierung so durchzuführen, dass die Doppelbindungen während der Hydrierung vollständig erhalten bleiben. In diesem Fall fallen ungesättigte Dimerdiole an. Bevorzugt wird die Hydrierung so durchgeführt, dass die Doppelbindungen möglichst vollständig hydriert werden.

Eine andere Möglichkeit zur Herstellung von Dimerdiolen besteht in der Dimerisierung von ungesättigten Alkoholen in Gegenwart von Kieselerde/Tonerde-Katalysatoren und basischer Alkalimetallverbindungen gemäß der internationalen Anmeldung WO 91/13918.

Unabhängig von den beschriebenen Verfahren zur Herstellung der Dimerdiole werden bevorzugt solche Dimerdiole (b3) verwendet, die aus C₁₈-Fettsäuren oder deren Estern beziehungsweise C₁₈-Fettalkoholen hergestellt worden sind. Auf diese Weise entstehen überwiegend Dimerdiole mit 36 Kohlenstoffatomen.

Dimerdiole, die nach den oben genannten technischen Verfahren hergestellt worden sind, weisen stets auch wechselnde Mengen an Trimertriolen und monofunktionellen Alkoholen auf. In der Regel liegt dabei der Anteil an dimeren Molekülen über 70 Gew.-% und der Rest sind trimere Moleküle und monomere Moleküle. Im Sinne der Erfindung können sowohl diese Dimerdiole eingesetzt werden als auch reinere Dimerdiole mit über 90 Gew.-% an dimeren Molekülen. Insbesondere bevorzugt werden Dimerdiole mit über 90 bis 99 Gew.-% an dimeren Molekülen, wobei hiervon solche Dimerdiole wiederum bevorzugt sind, deren Doppelbindungen und/oder aromatische Reste zumindest teilweise oder vollständig hydriert sind. Ein alternativer Ausdruck für den einschlägigen Begriff "Dimerdiole" ist also "Gemisch enthaltend Dimere herstellbar durch Dimerisierung von Fettalkoholen". Durch den Einsatz von Dimerdiolen wird also automatisch der Einsatz von difunktionellen Verbindungen (b) realisiert. Dies rechtfertigt auch die im Rahmen der vorliegenden Erfindung gewählte Angabe, dass Dimerdiole als Verbindung (b3) eingesetzt werden. Denn difunktionelle Verbindungen (b) sind augenscheinlich der Hauptbestandteil der als Dimerdiole bezeichneten Gemische. Werden also Dimerdiole als Verbindungen (b3) eingesetzt, ist damit gemeint, dass diese Verbindungen (b3) in Form von entsprechenden Gemischen mit wie oben beschriebenen monomeren und/oder trimeren Molekülen und/oder sonstigen Nebenprodukten eingesetzt werden.

Vorzugsweise sollte die mittlere Hydroxyfunktionalität der Dimerdiole 1,8 bis 2,2 betragen.

Im Sinne der vorliegenden Erfindung ist es daher besonders bevorzugt, solche Dimerdiole einzusetzen, die sich durch Hydrierung aus den oben beschriebenen Dimerfettsäuren herstellen lassen. Ganz besonders bevorzugt sind solche Dimerdiole, die zu ≥ 90 Gew.-% aus dimeren Molekülen, ≤ 5 Gew.-% aus trimeren Molekülen und ≤ als 5 Gew.-% aus monomeren Molekülen und sonstigen Nebenprodukten bestehen und/oder eine Hydroxylfunktionalität von 1,8 bis 2,2 aufweisen. Es ist besonders bevorzugt, solche Diole einzusetzen, die sich durch Hydrierung aus Dimerfettsäuren herstellen lassen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden solche Diole einzusetzen, die sich durch Hydrierung aus Dimerfettsäuren herstellen lassen, die zu ≥ 98 Gew.-% aus dimeren Molekülen, ≤ 1,5 Gew.-% aus trimeren Molekülen und zu ≤ 0,5 Gew.-% aus monomeren Molekülen und sonstigen Nebenprodukten bestehen.

Dimerfettsäuren, die zur Herstellung der Dimerdiole verwendet werden können, enthalten wie bereits oben beschrieben je nach Reaktionsführung sowohl aliphatische als auch gegebenenfalls aromatische Molekülfragmente. Die aliphatischen Molekülfragmente lassen sich ferner aufteilen in lineare und cyclische, welche wiederum gesättigt oder ungesättigt sein können. Durch eine Hydrierung lassen sich die aromatischen sowie die ungesättigten aliphatischen Molekülfragmente in entsprechende gesättigte aliphatische Molekülfragmente umwandeln. Die einsetzbaren Dimerdiole können demnach gesättigt oder ungesättigt sein. Bevorzugt sind die Dimerdiole aliphatisch, insbesondere aliphatisch und gesättigt.

Im Sinne der vorliegenden Erfindung werden bevorzugt solche Dimerdiole eingesetzt, die sich durch Hydrierung der Carbonsäuregruppen von vorzugsweise gesättigten aliphatischen Dimerfettsäuren herstellen lassen.

Besonders bevorzugt sind solche Diole, die sich durch Hydrierung aus Dimerfettsäuren herstellen lassen, die zu ≥ 98 Gew.-% aus dimeren Molekülen, ≤ 1,5 Gew.-% aus trimeren Molekülen und zu ≤ 0,5 Gew.-% aus monomeren Molekülen und sonstigen Nebenprodukten bestehen. Besonders bevorzugt besitzen die Dimerdiole eine Hydroxylzahl von 170 bis 215 mg KOH/g, ganz besonders bevorzugt von 195 bis 212 mg KOH/g und insbesondere 200 bis 210 mg KOH/g, bestimmt mittels DIN ISO 4629. Besonders bevorzugt besitzen die Dimerdiole eine Viskosität von 1500 bis 5000 mPas, ganz besonders bevorzugt 1800 bis 2800 mPas (25 °C, Brookfield, ISO 2555).

Als ganz besonders bevorzugt einzusetzende Dimerdiole sind die Handelsprodukte Pripol® 2030 und insbesondere Priopol® 2033 der Firma Uniquema oder Sovermol® 908 der Firma BASF zu nennen.

Die Dimerfettsäuren und die Dimerdiole (b3) werden hier bevorzugt in einem molaren Verhältnis von 0,7/2,3 bis 1,3/1,7, insbesondere von 0,9/2,1 bis 1,1/1,9, eingesetzt. Das Reaktionsprodukt besitzt im Allgemeinen ein zahlenmittleres Molekulargewicht von 1200 bis 5000 g/mol, insbesondere von 1300 bis 4500 g/mol.

Die Beschichtungsmittelzusammensetzung enthält das Reaktionsprodukt (RP) üblicherweise in einer Menge von 0,05 bis 10,0 Gew.-%, bevorzugt von 0,1 bis 8,0 Gew.-%, besonders bevorzugt in einer Menge von 0,2 bis 6,0 Gew.-%, jeweils bezogen auf den Bindemittelanteil der Beschichtungsmittelzusammensetzung (also jeweils bezogen auf die Summe aus dem Bindemittelanteil der Komponente (A) plus dem Bindemittelanteil der Komponente (B) plus dem Bindemittelanteil der Komponente (C) plus dem Bindemittelanteil der Komponente (RP) plus dem Bindemittelanteil der Komponente (E)).

### Katalysator (D)

Die Beschichtungsmittelzusammensetzung kann außerdem noch einen üblichen Katalysator enthalten. Als Katalysatoren für die Reaktion zwischen den Hydroxylgruppen der Komponenten (A), (RP) sowie ggf. (C) und den freien Isocyanatgruppen der Komponente (B) können an sich bekannte Verbindungen eingesetzt werden. Beispiele sind Lewis-Säuren (Elektronenmangelverbindungen), wie beispielsweise Zinnnaphtenat, Zinnbenzoat, Zinnnoctoat, Zinnbutryrat, Dibutylzinndilaurat, Dibutylzinndiacetat, Dibutylzinnoxid sowie Katalysatoren wie in WO-A-2006/042585 beschrieben.

Es können als Katalysator (D) auch Säurekatalysatoren eingesetzt werden. Bei den Säurekatalysatoren (D) handelt es sich bevorzugt um organische Säuren, insbesondere Sulfonsäuren, Carbonsäuren, Phosphorsäuren und/oder saure Phosphorsäureester, insbesondere Sulfonsäuren. Die genannten Säurekatalysatoren werden bevorzugt in blockierter Form eingesetzt. Dadurch wird bekanntermaßen beispielsweise die Lagerstabilität der Zusammensetzungen, die die Katalysatoren enthalten, verbessert. Geeignete Blockierungsmittel sind beispielsweise Amine wie bevorzugt tertiär alkylierte oder heterocyclische Amine. Geeignete Sulfonsäuren sind beispielsweise Dodecylbenzolsulfonsäure (DDBSA), Dinonylnaphthalendisulfonsäure (DNNSA), para-Toluolsulfonsäure (pTSA) sowie blockierte Sulfonsäurekatalysatoren wie blockierte DDBSA, blockierte DNNSA oder blockierte p-TSA. Die Blockierung der Sulfonsäurekatalysatoren erfolgt dabei beispielsweise ebenfalls über Amine wie bevorzugt tertiär alkylierte oder heterocyclische Amine, wie beispielsweise 2-Amino-2-methylpropanol, Diisopropanolamin, Dimethyloxazolidin oder Trimethylamin. Möglich ist auch der Einsatz von kovalentblockierten Sulfonsäurekatalysatoren. Hierbei werden zur Blockierung kovalent bindende Blockierungsmittel wie beispielsweise Epoxy- oder Epoxy-Isocyanat-Verbindungen eingesetzt. Solche blockierten Sulfonsäure-Katalysatoren werden detailliert in der Patentveröffentlichung U.S. Pat. No. 5.102.961 beschrieben. Bevorzugt werden Aminblockierte Sulfonsäurekatalysatoren eingesetzt. Solche Katalysatoren sind beispielsweise unter dem Handelsnamen CYCAT® (Firma Cytec) oder auch Nacure® (Firma King Industries) erhältlich und können direkt in der erfindungsgemäßen Klarlackbeschichtungszusammensetzung eingesetzt werden.

Als Katalysator (D) geeignet sind ferner auch Amidine und deren Derivate, insbesondere Derivate auf Basis eines Zink-Amidin-Komplexes, der herstellbar ist durch Umsetzung von einem oder mehreren Zink(II)biscarboxylaten mit einem oder mehreren Amidinen. Derartige Amidine sowie deren Derivate sind beispielsweise in der WO2012/123166, der WO 2012/123161 und der WO 2012/123198 beschrieben. Ferner sind auch die in der WO 2012/126796 und der WO 2013/110712 genannten Imidazole und deren Derivate als Katalysatoren geeignet.

Die Katalaysatoren werden vorzugsweise in Anteilen von 0,01 bis 20 Gew.-%, besonders bevorzugt in Anteilen von 0,1 bis 10 Gew.-%, bezogen auf den Bindemittelanteil der Beschichtungsmittelzusammensetzung (also jeweils bezogen auf den Festkörper aus Polyacrylat, Polyester u. Vernetzer, d.h. also jeweils bezogen auf die Summe aus dem Bindemittelanteil der Komponente (A) plus dem Bindemittelanteil der Komponente (B) plus dem Bindemittelanteil der Komponente (C) plus dem Bindemittelanteil der Komponente (RP) plus dem Bindemittelanteil der Komponente (E)), eingesetzt.

### Die Kombination der Komponenten (A), (B), ggf. (C) und (RP) sowie weitere Komponenten der Beschichtungsmittelzusammensetzungen

Handelt es sich um einkomponentige Beschichtungsmittelzusammensetzungen, so werden polyisocyanatgruppenhaltige Komponenten (B) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B) mit 3,5-Dimethylpyrazol blockiert.

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die polyhydroxylgruppenhaltige Komponente (A) sowie weitere nachfolgend beschriebene Komponenten, mit einer weiteren Lackkomponente, enthaltend die Polyisocyanatgruppen-haltige Komponente (B) sowie gegebenenfalls weitere der nachfolgend beschriebenen Komponenten in an sich bekannter Weise vermischt, wobei in der Regel die Lackkomponente, die die Komponente (A) enthält, das Reaktionsprodukt (RP) sowie einen Teil des Lösemittels enthält.

Die Polyhydroxykomponente (A) kann in einem geeigneten Lösemittel vorliegen. Geeignete Lösemittel sind solche, die eine ausreichende Löslichkeit der Polyhydroxykomponente ermöglichen. Beispiele für solche Lösemittel sind die bereits bei der polyisocyanatgruppenhaltigen Komponente (B) aufgeführten Lösemittel (L).

Die Gewichtsanteile des Polyols (A) und ggf. (C) und des Reaktionsprodukts (RP) sowie des Polyisocyanates (B) werden vorzugsweise solchermaßen gewählt, dass das molare Äquivalentverhältnis der Hydroxylgruppen der polyhydroxylgruppenhaltigen Komponente (A) plus ggf. (C) plus (RP) zu den Isocyanatgruppen der Komponente (B) zwischen 1:0,9 und 1:1,5, bevorzugt zwischen 1:0,9 und 1:1,1 besonders bevorzugt zwischen 1:0,95 und 1:1,05, liegt.

Bevorzugt werden erfindungsgemäß Beschichtungsmittelzusammensetzungen eingesetzt, die von 30 bis 75 Gew.-%, bevorzugt von 40 bis 65 Gew.-%, jeweils bezogen auf den Bindemittelanteil der Beschichtungsmittelzusammensetzung, mindestens einer polyhydroxylgruppenhaltigen Komponente (A), insbesondere mindestens eines polyhydroxylgruppenhaltigen Polyacrylates (A) und/oder mindestens eines polyhydroxylgruppenhaltigen Polymethacrylates (A), enthalten.

Ebenfalls bevorzugt werden erfindungsgemäß Beschichtungsmittelzusammensetzungen eingesetzt, die von 20 bis 50 Gew.-%, bevorzugt von 25 bis 40 Gew.-%, jeweils bezogen auf den Bindemittelanteil der Beschichtungsmittelzusammensetzung, der polyisocyanatgruppenhaltigen Komponente (B) enthalten.

Daneben können die erfindungsgemäßen Beschichtungsmittel noch ein oder mehrere Aminoplastharze (E) enthalten. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben. In der Regel werden solche Aminoplastharze (E) in Anteilen von 0 bis 20 Gew.-%, bevorzugt von 3 bis 15 Gew.-%, bezogen auf den Bindemittelanteil der Beschichtungsmittelzusammensetzung, eingesetzt.

Bevorzugt enthalten die erfindungsgemäßen Beschichtungsmittelzusammensetzungen außerdem mindestens ein übliches und bekanntes, von den Komponenten (A), (B), (D), ggf. (C), ggf. (E) und (RP) verschiedenes Lackadditiv (F) in wirksamen Mengen, d.h. in Mengen vorzugsweise bis zu 20 Gew.-%, besonders bevorzugt von 0 bis zu 10 Gew.-%, jeweils bezogen auf den Bindemittelanteil der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- Rheologiehilfsmittel, beispielsweise auf Basis üblicher hydrophiler und/oder hydrophober pyrogener Kieselsäure, wie verschiedene Aerosil®-Typen, oder übliche Rheologiehilfsmittel auf Harnstoff-Basis
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Flammschutzmittel.

Besonders bevorzugt sind Beschichtungsmittelzusammensetzungen, die 40 bis 65 Gew.-%, bezogen auf den Bindemittelanteil der Beschichtungsmittelzusammensetzung, mindestens eines polyhydroxylgruppenhaltigen Polyacrylates (A) und/oder mindestens eines polyhydroxylgruppenhaltigen Polymethacrylates (A) und/oder mindestens eines von der Komponente (RP) verschiedenen polyhydroxylgruppenhaltigen Polyesterpolyols (A) und/oder eines polyhydroxylgruppenhaltigen Polyurethans (A),
25 bis 40 Gew.-%, bezogen auf den Bindemittelanteil der Beschichtungsmittelzusammensetzung, mindestens einer Komponente (B),
0 bis 5 Gew.-%, bezogen auf den Bindemittelanteil der Beschichtungsmittelzusammensetzung, der hydroxylgruppenhaltigen Komponente (C),
0,1 bis 8,0 Gew.-%, bezogen auf den Bindemittelanteil der erfindungsgemäßen Beschichtungsmittelzusammensetzung, mindestens eines Reaktionsprodukts (RP)
3 bis zu 15 Gew.-%, bezogen auf den Bindemittelanteil der Beschichtungsmittelzusammensetzung, mindestens eines Aminoplastharzes (E),
0,1 bis 10 Gew.-%, bezogen auf den Bindemittelanteil der erfindungsgemäßen Beschichtungsmittelzusammensetzung, mindestens eines Katalysators (D) für die Vernetzung und
0 bis 10 Gew.-%, bezogen auf den Bindemittelanteil der Beschichtungsmittelzusammensetzung, mindestens eines üblichen und bekannten Lackadditivs (F)
enthalten.

Der bei den Mengen der einzelnen Komponenten angegebene Bindemittelanteil der Beschichtungsmittelzusammensetzung ist jeweils die Summe aus dem Bindemittelanteil der Komponente (A) plus dem Bindemittelanteil der Komponente (B) plus dem Bindemittelanteil der Komponente (C) plus dem Bindemittelanteil der Komponente (RP) plus dem Bindemittelanteil der Komponente (E).

Insbesondere handelt es sich bei den erfindungsgemäßen Beschichtungsmitteln um transparente Beschichtungsmittel, vorzugsweise Klarlacke. Die erfindungsgemäßen Beschichtungsmittel enthalten daher keine Pigmente oder nur organische transparente Farbstoffe oder transparente Pigmente.

In einer weiteren Ausführungsform der Erfindung kann die erfindungsgemäße Bindemittelmischung bzw. die erfindungsgemäße Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05: 1 und 1,5: 1 liegt, jeweils bezogen auf den Bindemittelanteil der Beschichtungsmittelzusammensetzung.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C, bevorzugt 40 bis 190°C und insbesondere 50 bis 180°C, während einer Zeit von 1 min bis zu 10 h, bevorzugt 2 min bis 5 h und insbesondere 3 min bis 3h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäßen Beschichtungsmittel eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelzusammensetzungen können daher beispielsweise auf ein ggf. vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelzusammensetzungen und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon sowie der Automobilreparaturlackierung eingesetzt, wobei die Automobilreparaturlackierung sowohl die Reparatur der Serienlackierung an der Linie als auch die Reparatur von lokalen Defekten, wie beispielsweise Kratzern, Steinschlagschäden u.Ä., als auch die komplette Neulackierung in entsprechenden Reparaturbetrieben und Autolackierereien zur Aufwertung von Fahrzeugen umfasst.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/- Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelzusammensetzungen in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtzeiten zur Anwendung kommen können.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

### Beispiele

### Herstellung eines Polyacrylat-Polyols (A1)

In einem Reaktor, der mit Stickstoff gespült wurde und auf dem ein Kühler angebracht ist, werden 589,25 Gewichtsteile Solventnaphta® vorgelegt und unter Rühren auf 140°C aufgeheizt. Parallel dazu wurden zwei separate Zuläufe präpariert. Zulauf 1 bestand aus 340,75 Gewichtsteilen Cyclohexylmethacrylat , 262,00 Gewichtsteilen Styrol, 209,25 Gewichtsteilen n-Butylmethacrylat, 235,75 Gewichtsteilen 2 - Hydroxyethylmethacrylat und 262,00 Gewichtsteilen Hydroxypropylmethacrylat. Zulauf 2 bestand aus 61,00 Gewichtsteilen Solventnaphta® und 130,75 Gewichtsteilen Peroxid TBPEH (TERT-BUTYL-PEROXY-2-ETHYLHEXANOAT). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Die Polymerisationslösung wird mit 409,25g Methoxypropylacetat verdünnt. Der Bindemittelanteil des so erhaltenen Produktes wurde zu 55,15 %, die Säurezahl zu 1,5 mg KOH / g (bezogen auf den Festkörper) und die Viskosität (bei 23°C) zu 650 m Pa s bestimmt. Die theoretische OH-Zahl beträgt 156 mgKOH/g.

### Herstellung eines Polyacrylat-Polyols (A2)

In einem Reaktor, der mit Stickstoff gespült wurde und auf dem ein Kühler angebracht ist, werden 678,22 Gewichtsteile Solventnaphta® vorgelegt und unter Rühren auf 140°C aufgeheizt. Parallel dazu wurden zwei separate Zuläufe präpariert. Zulauf 1 bestand aus 335,73 Gewichtsteilen Cyclohexylmethacrylat , 258,28 Gewichtsteilen Styrol, 193,25 Gewichtsteilen n-Butylmethacrylat, 232,38 Gewichtsteilen 2 - Hydroxyethylmethacrylat, 12,83 Gewichtsteilen Acrylsäure und 258,28 Gewichtsteilen HydroxypropyImethacrylat. Zulauf 2 bestand aus 58,33 Gewichtsteilen Solventnaphta® und 129,03 Gewichtsteilen Peroxid TBPEH (TERT-BUTYL-PEROXY-2-ETHYLHEXANOAT). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Die Polymerisationslösung wir mit einer Mischung aus 146,60g Butylacetat und 196,70 Solventnaphtha verdünnt. Der Bindemittelanteil des so erhaltenen Produktes wurde zu 55,10 %, die Säurezahl zu 9,6 mg KOH / g (bezogen auf den Festkörper) und die Viskosität (bei 23°C) zu 1120 m Pa s bestimmt. Die theoretische OH-Zahl beträgt 156 mgKOH/g.

### Herstellung der Aerosilpaste (A3)

In einer Labor-Rührwerksmühle der Firma Vollrath werden 800g Mahlgut, bestehend aus 656g des Polyacrylats A2, 74,4g Butylacetat und 69,6g Aerosil® R380 (Evonik Industries AG, Hanau - Oberfläche nach BET = 380 ± 30 m2/g), zusammen mit 110g Quarzsand (Korngröße 0,70-01 mm) eingewogen und unter Waserkühlung 30 min. angerieben. Anschließend wurde von den Mahlköpern abgetrennt.

### Herstellung eines Reaktionsproduktes (R1)

Wie in der internationalen Patentanmeldung Nr. PCT/EP2013/067742 im Beispiel BE1 beschrieben, wird das Reaktionsprodukt (R1) folgendermaßen hergestellt: In einem 4 l Edelstahlreaktor, ausgestattet mit Ankerrührer, Thermometer, Kühler, Thermometer zur Kopftemperaturmessung und Wasserabscheider wurden 2 mol PolyTHF®1000 der Firma BASF S.E., 579,3 g Dimerfettsäure (1mol) und 51 g Cyclohexan in Anwesenheit von 2,1 g Di-n-butylzinnoxid (Axion® CS 2455, Fa. Chemtura)auf 100°C aufgeheizt. Es wurde langsam weitergeheizt bis zum Einsetzen der Kondensation. Bei einer maximalen Kopftemperatur von 85°C wurde dann schrittweise bis auf 220°C weitergeheizt. Der Reaktionsfortschritt wurde über die Bestimmung der Säurezahl verfolgt. Nach Erreichen einer Säurezahl von ≤ 3 mg KOH/g wurde noch vorhandenes Cyclohexan unter Vakuum abdestilliert. Man erhielt ein zähflüssiges Harz.
Kondensatmenge (Wasser): 34,9 g
Säurezahl: 2,7 mg KOH / g
Feststoffgehalt (60 min bei 130°C): 100,0 %
Molekulargewicht (Kalibrierung: PMMA-Standards):
Mn: 3900 g/mol
Mw: 7200 g/mol
Viskosität: 5549 mPas,
(gemessen bei 23°C mit einem Rotationsviskosimeter der Fa. Brookfield, Typ CAP 2000+, Spindel 3, Scherrate: 1333 s-1)

### Formulierung der Beschichtungsmittel der erfindungsgemäßen Beispiele B1 bis B5 und des Beschichtungsmittel des Vergleichsbeispiels V1 sowie der entsprechenden Beschichtungen der Beispiele 1 bis 5 und des Vergleichsbeispiels V1

Zur Herstellung der Stammlacke (S2), (S3), (S4), (S5) und (S6) der erfindungsgemäßen Beispiele und des Stammlackes (S1) des Vergleichsbeispiels werden die in Tabelle 1 angegebenen Bestandteile in angegebener Reihenfolge (von oben beginnend) in einem geeigneten Gefäß in dieser Reihenfolge eingewogen und innig miteinander verrührt.

**Tabelle 1: Zusammensetzung der Stammlacke S1 bis S6 in Gew.-Teilen**

| Komponente | Gew.-Teile Stammlack (S1) | Gew.-Teile Stammlack (S2) | Gew.-Teile Stammlack (S3) | Gew.-Teile Stammlack (S4) | Gew.-Teile Stammlack (S5) | Gew.-Teile Stammlack (S6) |
|---|---|---|---|---|---|---|
| Polyacrylat-Polyol (A1) | 35 | 35 | 35 | 35 | 35 | 35 |
| Polyacrylat-Polyol (A2) | 26 | 26 | 26 | 26 | 26 | 26 |
| Rheologieagens Setalux® 91756 ¹⁾ | 13 | 13 | 13 | 13 | 13 | 13 |
| Paste A3 ²⁾ | 2 | 2 | 2 | 2 | 2 | 2 |
| Cymel® 202 ³⁾ | 8 | 8 | 8 | 8 | 8 | 8 |
| TINUVIN® 384 ⁴⁾ | 1,1 | 1,1 | 1,1 | 1,1 | 1,1 | 1,1 |
| TINUVIN® 292 ⁵⁾ | 0,9 | 0,9 | 0,9 | 0,9 | 0,9 | 0,9 |
| BYK® 325 ⁶⁾ | 0,15 | 0,15 | 0,15 | 0,15 | 0,15 | 0,15 |
| Butylacetat | 3,65 | 3,65 | 3,65 | 3,65 | 3,65 | 3,65 |
| Dipropylenglykolmethylether | 7 | 7 | 7 | 7 | 7 | 7 |
| Butanol | 1 | 1 | 1 | 1 | 1 | 1 |
| Solventnaphta® | 2,2 | 2,2 | 2,2 | 2,2 | 2,2 | 2,2 |
| Reaktionsprodukt (R1) | 0 | 0,25 | 0,50 | 1,00 | 2,00 | 4,00 |
| Anteil R1 im angelösten Stammlack in Gew.-% | 0,00 | 0,2 | 0,5 | 1,0 | 2,0 | 3,8 |
| Anteil R1 im Stammlack, bezogen auf Bi.anteil, in Gew.-% ⁷⁾ | 0,00 | 0,5 | 0,9 | 1,9 | 3,8 | 7,4 |
| Anteil R1 im Gesamtlack, bezogen auf Bi.anteil, in Gew.-% ⁸⁾ | 0,00 | 0,3 | 0,6 | 1,3 | 2,5 | 4,9 |

| | | | | | | |
|---|---|---|---|---|---|---|
| Erläuterungen zu Tabelle 1: ¹⁾ Setalux® 91756 = handelsübliches Rheologieagens der Firma Nuplex Resins, Niederlande, auf Harnstoff-Basis, gelöst bzw. dispergiert in einem Polyacrylat-Bindemittel, mit einem nichtflüchtigen Anteil von 60 Gew.-% ²⁾ oben beschriebene Paste A3 von Aerosil® ³⁾ Cymel® 202 = handelsübliches Melaminharz der Firma Cytec, 82%ig in Butanol. ⁴⁾ Tinuvin® 384 = handelsübliches Lichtschutzmittel auf Basis eines Benztriazols der Firma BASF S.E. ⁵⁾ Tinuvin® 292 = handelsübliches Lichtschutzmittel auf Basis eines sterisch gehinderten Amins der Firma BASF S.E. ⁶⁾ Byk® 325 = handelsübliches, polyethermodifiziertes Polymethylalkylsiloxan der Firma Byk Chemie ⁷⁾ Anteil des Reaktionsproduktes R1 in Gew.-% im jeweiligen Stammlack (S1) bis (S6), jeweils bezogen bezogen auf den Bindemittelanteil des jeweiligen Stammlacks ⁸⁾ Anteil des Reaktionsproduktes R1 in Gew.-% im jeweiligen Gesamtlack (KL1) bis (KL6), jeweils bezogen bezogen auf den Bindemittelanteil (inklusive Vernetzer) des jeweiligen Gesamtlacks | | | | | | |

### Härterlösung (B)

Zur Herstellung der Härterlösung werden in einem geeigneten Gefäß 13,5 Teile eines handelsüblichen Isophorondiisocyanates (70%ig in Solventnaphta®), 69,5 Teile eines handelsüblichen Isocyanurates von Hexamethylendiisocyanat (90%ig in Butylacetat/Solventnaphta® 1:1), 8,5 Teile Solventnaphta® und 8,5 Teile Butylacetat eingewogen und innig miteinander verrührt.

Zur Herstellung der Beschichtungsmittel (KL) der erfindungsgemäßen Beispiele B1 bis B5 und des Beschichtungsmittels des Vergleichsbeispiels V1 werden die in Tabelle 2 angegebenen Bestandteile in angegebener Reihenfolge (von oben beginnend) in einem geeigneten Gefäß in dieser Reihenfolge eingewogen und innig miteinander verrührt.

**Tabelle 2: Zusammensetzung der Beschichtungsmittel der Beispiele B1 bis B5 und des Vergleichsbeispiels V1 in Gew.-Teilen (bei einem Mischungsverhältnis von 100 Gewichtsteilen Stammlack zu 36 Gewichtsteilen Härter)**

| | Vgl. V1 | B1 | B2 | B3 | B4 | B5 |
|---|---|---|---|---|---|---|
| Stammlack (S1) | 100 | | | | | |
| Stammlack (S2) | | 100 | | | | |
| Stammlack (S3) | | | 100 | | | |
| Stammlack (S4) | | | | 100 | | |
| Stammlack (S5) | | | | | 100 | |
| Stammlack (S6) | | | | | | 100 |
| Härterlösung (B) | 36 | 36 | 36 | 36 | 36 | 36 |

Bonderbleche werden nacheinander mit einer handelsüblichen KTL (CathoGuard® 500 der Firma BASF Coatings GmbH) und mit einem handelsüblichen wasserbasierten Füller (SecuBloc® der Firma BASF Coatings GmbH) beschichtet und jeweils eingebrannt. Danach wird mit handelsüblichem schwarzen Wasserbasislack (ColorBrite® der Firma BASF Coatings GmbH) beschichtet und 7 min bei 80°C getrocknet. Die so erhaltenen Beschichtungsmittel der Beispiele B1 bis B5 und des Vergleichsbeispiels V1 werden anschließend mit einer Fließbecherpistole appliziert und zusammen mit dem Basislack 20 Minuten bei 135°C eingebrannt.

Von der so erhaltenen Beschichtung wird jeweils die Mikroeindringhärte nach DIN EN ISO 14577-4 DE bestimmt.

Danach wird ein Gitterschnitt entsprechend der Norm DIN EN ISO 2409 DE geritzt und die Haftung mit Tesa-Abriss getestet. Die Haftungsprüfung ist bestanden, wenn der Gitterschnitt Gt ≤ 2 ist. Die Prüfergebnisse sind in Tabelle 3 dargestellt.

**Tabelle 3: Prüfergebnisse der Beschichtungen der Beispiele B1 bis B5 und des Vergleichsbeispiels V1**

| | Vgl. V1 | B1 | B2 | B3 | B4 | B5 |
|---|---|---|---|---|---|---|
| Gitterschnitt ¹⁾ | Gt 5 | Gt 1 | Gt 0 | Gt 0 | Gt1-2 | Gt 2 |
| Härte ²⁾ | 170 | 158 | 150 | 150 | 127 | 111 |
| | | | | | | |
| Menge R1 im Gesamtlack, bezogen auf Bi.anteil (FK aus den Polymeren), in Gew.-% | 0,00 | 0,3 | 0,6 | 1,3 | 2,5 | 4,9 |

| | | | | | | |
|---|---|---|---|---|---|---|
| Erläuterungen zu Tabelle 3: ¹⁾ Die Haftung wurde mit der Gitterschnittmethode entsprechend der Norm DIN EN ISO 2409 DE und mit Tesa-Abriss getestet. ²⁾ Die Härte wurde per Mikroeindringhärte entsprechend der Norm DIN EN ISO 14577-4 DE getestet. | | | | | | |

### Diskussion der Prüfergebnisse:

Der Vergleich der erfindungsgemäßen Beispiele B1 bis B5 mit dem Vergleichsbeispiel V1 zeigt, dass durch den erfindungsgemäßen Zusatz des Reaktionsproduktes R1 die Haftung der Beschichtungen deutlich verbessert wird. Allerdings nimmt mit steigendem Anteil an Reaktionsprodukt R1 die Härte der Beschichtungen ab.

## Patentansprüche

1. Nichtwässrige Beschichtungsmittelzusammensetzung, die
(A) mindestens eine polyhydroxylgruppenhaltige Komponente (A) und
(B) mindestens eine polyisocyanatgruppenhaltige Komponente (B), enthält, **dadurch gekennzeichnet, dass**
die Beschichtungsmittelzusammensetzung mindestens ein von der Komponente (A) verschiedenes hydroxyfunktionelles Reaktionsprodukt (RP) enthält, das
(i) eine Säurezahl < 20 mg KOH/g besitzt und
(ii) herstellbar ist durch Umsetzung von mindestens einer Dimerfettsäure (a) mit mindestens einer aliphatischen, araliphatischen oder aromatischen dihydroxyfunktionellen Verbindung (b), wobei die dihydroxyfunktionelle Verbindung (b) ein zahlenmittleres Molekulargewicht von 120 bis 6000 g/mol aufweist.

2. Beschichtungsmittelzusammensetzung nach Anspruch 1, **dadurch gekennzeichnet, dass** die Verbindung (b) oder die Verbindungen (b) ausgewählt sind aus der Gruppe bestehend aus
(1) mindestens einem Polyetherdiol (b1) der allgemeinen Strukturformel (I) 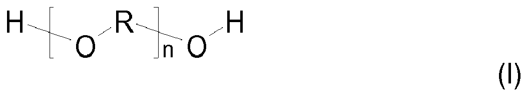 wobei es sich bei R um einen C₃- bis C₆-Alkylenrest handelt und n entsprechend so gewählt ist, dass der Polyether (b1) ein zahlenmittleres Molekulargewicht von 120 bis 6.000 g/mol besitzt,
und/oder
(2) mindestens einem Polyesterdiol (b2) der allgemeinen Strukturformel (II) 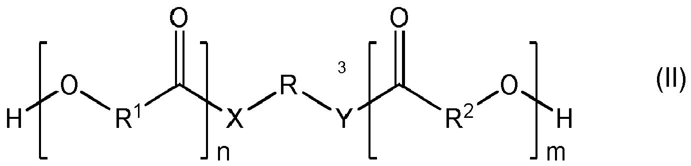 wobei
R³ für einen divalenten organischen Rest umfassend 2 bis 10 Kohlenstoffatome steht,
R¹ und R² unabhängig voneinander für geradkettige oder verzweigte Alkylenreste mit 2 bis 10 Kohlenstoffatomen stehen,
X und Y unabhängig voneinander für O, S oder NR⁴ stehen, worin R⁴ für Wasserstoff oder einen Alkylrest mit 1 bis 6 Kohlenstoffatomen steht, und
m und n entsprechend so gewählt sind, dass das Polyesterdiol (b2) ein zahlenmittleres Molekulargewicht von 450 bis 2200 g/mol besitzt,
und/oder
(3) mindestens einem Dimerdiol (b3).

3. Beschichtungsmittelzusammensetzung nach Anspruch 1 oder 2, **dadurch gekennzeichnet, dass** die zur Herstellung des Reaktionsproduktes (RP) eingesetzte Dimerfettsäure (a) zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten besteht.

4. Beschichtungsmittelzusammensetzung nach einem der Ansprüche 1 bis 3, **dadurch gekennzeichnet, dass** die zur Herstellung des Reaktionsproduktes (RP) eingesetzte Dimerfettsäure (a) aus Linolen-, Linol- und/oder Ölsäure hergestellt wird und/oder zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten besteht und eine Iodzahl von ≤ 10 g/100 g besitzt.

5. Beschichtungsmittelzusammensetzung nach einem der Ansprüche 1 bis 4, **dadurch gekennzeichnet, dass** das Reaktionsprodukt (RP) ein zahlenmittleres Molekulargewicht von 600 bis 40.000 g/mol, insbesondere von 800 bis 10.000 g/mol, ganz besonders von 1200 bis 5000 g/mol, besitzt und/oder das Reaktionsprodukt (RP) eine Säurezahl < 10 mg KOH/g aufweist und/oder die Komponenten (a) und (b) in einem molaren Verhältnis von 0,7/2,3 bis 1,6/1,7 eingesetzt werden.

6. Beschichtungsmittelzusammensetzung nach einem der Ansprüche 1 bis 5, **dadurch gekennzeichnet, dass** die Beschichtungsmittelzusammensetzung mindestens ein Reaktionsprodukt (RP) enthält, das herstellbar ist durch Umsetzung von mindestens einer Dimerfettsäure (a) mit mindestens einem Polyetherdiol (b1) der allgemeinen Strukturformel (I), wobei es sich bei der Gruppe R gemäß der allgemeinen Strukturformel (I) um Propylenreste oder iso-Propylenreste oder Tetramethylenreste, insbesondere um Tetramethylenreste, handelt.

7. Beschichtungsmittelzusammensetzung nach einem der Ansprüche 1 bis 6, **dadurch gekennzeichnet, dass** die Beschichtungsmittelzusammensetzung mindestens ein Reaktionsprodukt (RP) enthält, das ein zahlenmittleres Molekulargewicht von 1500 bis 5000 g/mol besitzt und das herstellbar ist durch Umsetzung von mindestens einer Dimerfettsäure (a) mit mindestens einem Polyetherdiol (b1) der allgemeinen Strukturformel (I), wobei das Polyetherdiol (b1) ein zahlenmittleres Molekulargewicht von 450 bis 2200 g/mol besitzt und die Komponenten (a) und (b1) in einem molaren Verhältnis von 0,7/2,3 bis 1,3/1,7 eingesetzt werden.

8. Beschichtungsmittelzusammensetzung nach einem der Ansprüche 1 bis 7, **dadurch gekennzeichnet, dass** die Beschichtungsmittelzusammensetzung mindestens ein Reaktionsprodukt (RP) enthält, das ein zahlenmittleres Molekulargewicht von 2500 bis 4000 g/mol und eine Säurezahl < 5 mgKOH/g besitzt und das herstellbar ist durch Umsetzung von mindestens einer Dimerfettsäure (a) mit mindestens einem Polyetherdiol (b1) der allgemeinen Strukturformel (I), wobei das Polyetherdiol (b1) ein zahlenmittleres Molekulargewicht von 800 bis 1200 g/mol besitzt und die Komponenten (a) und (b1) in einem molaren Verhältnis von 0,9/2,1 bis 1,1/1,9 eingesetzt werden.

9. Beschichtungsmittelzusammensetzung nach einem der Ansprüche 1 bis 8, **dadurch gekennzeichnet, dass** die Beschichtungsmittelzusammensetzung mindestens ein Reaktionsprodukt (RP) enthält, das herstellbar ist durch Umsetzung von mindestens einer Dimerfettsäure (a) mit mindestens einem Polyetherdiol (b1) der allgemeinen Strukturformel (I), wobei das Polyetherdiol (b1) ein zahlenmittleres Molekulargewicht von 2250 bis 6000 g/mol besitzt, die Komponenten (a) und (b1) in einem molaren Verhältnis von 0,7/2,3 bis 1,6/1,7 eingesetzt werden und das Reaktionsprodukt (RP) ein zahlenmittleres Molekulargewicht von 4.800 bis 40.000 g/mol besitzt.

10. Beschichtungsmittelzusammensetzung nach einem der Ansprüche 1 bis 9, **dadurch gekennzeichnet, dass** die Beschichtungsmittelzusammensetzung mindestens ein Reaktionsprodukt (RP) enthält, das herstellbar ist durch Umsetzung von mindestens einer Dimerfettsäure (a) mit mindestens einem Polyetherdiol (b1) der allgemeinen Strukturformel (I), wobei das Polyetherdiol (b1) ein zahlenmittleres Molekulargewicht von von 120 bis 445 g/mol besitzt, die Komponenten (a) und (b1) in einem molaren Verhältnis von 0,7/2,3 bis 1,6/1,7 eingesetzt werden und das Reaktionsprodukt (RP) ein zahlenmittleres Molekulargewicht von 600 bis 4000 g/mol besitzt.

11. Beschichtungsmittelzusammensetzung nach einem der Ansprüche 1 bis 10, **dadurch gekennzeichnet, dass** die Beschichtungsmittelzusammensetzung mindestens ein Reaktionsprodukt (RP) enthält, das herstellbar ist durch Umsetzung von mindestens einer Dimerfettsäure (a) mit mindestens einem Polyesterdiol (b2) der allgemeinen Strukturformel (II), wobei das Polyesterdiol (b2) ein zahlenmittleres Molekulargewicht von 450 bis 2200 g/mol besitzt, und wobei die Komponenten (a) und (b) in einem molaren Verhältnis von 0,7/2,3 bis 1,3/1,7 eingesetzt werden und das resultierende Dimerfettsäure-Polyesterdiol-Reaktionsprodukt ein zahlenmittleres Molekulargewicht von 1200 bis 5000 g/mol besitzt.

12. Beschichtungsmittelzusammensetzung nach einem der Ansprüche 1 bis 11, **dadurch gekennzeichnet, dass** die Beschichtungsmittelzusammensetzung mindestens ein Reaktionsprodukt (RP) enthält, das herstellbar ist durch Umsetzung von mindestens einer Dimerfettsäure (a) mit mindestens einem Dimerdiol (b3), das hergestellt wird durch (b3a) Oligomerisierung von ungesättigten Fettsäuren oder deren Estern und anschließender Hydrierung der Säure- oder Estergruppen oder (b3b) durch Oligomerisierung von ungesättigten Fettalkoholen mit 12 bis 22 Kohlenstoffatomen und wobei die Komponenten (a) und (b3) in einem molaren Verhältnis von 0,7/2,3 bis 1,3/1,7 eingesetzt werden und das Reaktionsprodukt (RP) ein zahlenmittleres Molekulargewicht von 1200 bis 5000 g/mol besitzt.

13. Beschichtungsmittelzusammensetzung nach einem der Ansprüche 1 bis 12, **dadurch gekennzeichnet, dass** die Beschichtungsmittelzusammensetzung das Reaktionsprodukt (RP) in einer Menge von 0,05 bis 10,0 Gew.-%, bezogen auf den Bindemittelanteil der Beschichtungsmittelzusammensetzung, enthält.

14. Beschichtungsmittelzusammensetzung nach einem der Ansprüche 1 bis 13, **dadurch gekennzeichnet, dass** die Polyole (A) eine OH-Zahl von 30 bis 400 mg KOH/g, insbesondere zwischen 70 und 250 mg KOH/g, aufweisen und/oder dass die Polyole (A) ausgewählt sind aus der Gruppe der vom Reaktionsprodukt (RP) verschiedenen Polyesterpolyole, Polyurethanpolyole, Polysiloxanpolyole, Polyacrylatpolyole, Polymethacrylatpolyole oder Mischungen dieser Polyole, insbesondere der vom Reaktionsprodukt (RP) verschiedenen Polyesterpolyole, Polyacrylatpolyole, Polymethacrylatpolyole, Polyurethanpolyole oder deren Mischungen.

15. Mehrstufiges Beschichtungsverfahren, **dadurch gekennzeichnet, dass** auf ein gegebenenfalls vorbeschichtetes Substrat eine pigmentierte Basislackschicht und danach eine Schicht aus der Beschichtungsmittelzusammensetzung nach einem der Ansprüche 1 bis 14 aufgebracht wird.

16. Verwendung der Beschichtungsmittelzusammensetzung nach einem der Ansprüche 1 bis 14 als Klarlack beziehungsweise Anwendung des Verfahrens nach Anspruch 15 für die Automobilserienlackierung, die Lackierung von Automobil-Anbauteilen und/oder Nutzfahrzeugen und die Autoreparaturlackierung.

17. Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einer Beschichtungsmittelzusammensetzung nach einem der Ansprüche 1 bis 14 hergestellt worden ist.
